# EUROPEAN PATENT APPLICATION

(11) **EP 1 528 463 A1**
(43) Date of publication of application: **04.05.2005**
(21) Application number: 03292723.8
(22) Date of filing: 31.10.2003
(51) Int. Cl.: G06F 9/44

(54) **Generating access functions for accessing sub data structures**

(71) Applicant: Hewlett-Packard Development Company, L.P., Houston, TX 77070 (US)
(72) Inventor: Baratange, Sébastien, 38000 Grenoble (FR); Kyriakides, Lionel, Brignoud, 38190 (FR)
(74) Representative: Lloyd, Richard Graham

(57) **Abstract**

A method, and a corresponding development environment, is described for providing access functions to substructure fields within a data structure, such as an octet string, defined using a standard datatype definition, such as an ASN.1 definition, comprising: labeling the data structure within the standard definition; providing a corresponding definition of the substructure; generating from the labeled standard datatype definition and the corresponding substructure definition, a table that links the data structure with position data positioning the substructure with respect to the data structure; compiling the standard datatype definition to generate access functions for the data structure; and generating access functions for the substructure fields by combining the access functions for the data structure and using the position information from the generated table to access to data items therein.

## Description

### Field of the Invention

This invention relates to the accessing of digital substructures within data structures defined using standard notation, and more particularly, but not exclusively, to the accessing of substructure fields in ASN.1 message set definitions used in telecommunications.

### Background of the Invention

The operation of telecommunications network elements and the communications protocols used on the input and output data flows and signaling data flows are often specified in communication standards written mainly in natural language, but with message sets and structures often being specified using formal notation which is effectively a form of program code that can be compiled from a machine-readable form. An example of such a protocol specification defined in this way can be found, for instance, in the European Telecommunication standard "Intelligent Network (IN); Intelligent Network Capability Set 1 (CS1); Core Intelligent Network Application Protocol (INAP) Part 1: Protocol Specification" published by the European Telecommunications Standards Institute.

ASN.1 is an abbreviation of the Abstract Syntax Notation One (ISO/IBC 8824:1990, "Information Technology-Open Systems Interconnection-Specification of Abstract Syntax Notation One" (ASN.1)) which is a widely used formal notation for describing data transmitted by telecommunications protocols independently of the language implementation and physical representation of data. ASN.1 is specified as an international standard, which is used in data communications for description of data types such as OSI (Open System Interconnection) and ISDN (Integrated Services for Digital Network). This notation is supplemented by the specification of one or more algorithms called encoding rules that determine the actual values of the binary data that carry the data structures defined by the ASN.1 code.

Specifications written in ASN.1 are compiled using an ASN.1 compiler which typically generates computer source code (in C or some other standard programming language) and control tables which can be used control a coder/decoder for messages complying with the specification, and encoded using the applicable encoding rules, and provides functions that allow an application or service logic program to manipulate the contents of the messages.

The data contained in the messages used in telecommunications systems needs largely to be processed in real time and with very low latency. In many cases this means, or has meant, that the data is used directly to control the digital logic of the switching and other hardware in the network rather than being processed indirectly by software layers. Since telecommunication protocol standards when they are defined need to accommodate a wide variety of underlying legacy hardware and legacy protocols, this has resulted, in many cases, in the content of messages being defined in the prevailing standards in terms of 8-bit data items that can most easily be handled directly by the digital logic of the switching hardware.

In the ASN.1 notation, an 8-bit data item is specified by the OCTET STRING standard data type that is available in ASN.1 and in practice one can observe that in many telecommunications standards message data items are specified exclusively or to a very large extent by OCTET STRING structures.

However, such OCTET STRING data structures may, in fact, be used to contain data that has an underlying logical substructure. For example a date may be represented by using 2 bits to represent a year, 4 bits to represent a month and 6 bits to represent the day of the month. Such date data may, for instance be packed into a data item of OCTET STRING type of length 2. It will be appreciated that specifications of the message sets used in modem telecommunications systems are much more complex than the above-mentioned simple example and may contain very many fields arranged in complex hierarchies and very lengthy OCTET STRINGS. Typically the sub-structures underlying these OCTET STRINGS are not mandated by the protocol standards nor are they contained in the standard ASN.1 definitions provided by the standard, but may be simply mentioned therein by way of a comment or recommendation.

The present invention is directed to providing the means to conveniently manipulate such substructures by way of standardized ASN.1 protocol definitions and a standard ASN.1 compiler, that is the techniques described only rely on the ability of the ASN.1 compiler to handle standard ASN.1 code.

### Summary of the Invention

In brief, this is achieved by a method for providing access functions to substructure fields within a data structure defined using a standard datatype definition. The method comprises: labeling the data structure within the standard definition;
providing a corresponding definition of the substructure; generating from the labeled standard datatype definition and the corresponding substructure definition, a table that links the data structure with position data positioning the substructure with respect to the data structure; compiling the standard datatype definition to generate access functions for the data structure; and generating access functions for the substructure fields by combining the access functions for the data structure and using the position information from the generated table to access to data items therein.

In preferred embodiments, shortnames are defined for the substructure fields, and the shortnames are linked to the standard datatype declaration in the generated table.

The data structure can be an octet string and the position data can be a length and an offset value within the octet string.

In preferred embodiments, the substructure definitions are also expressed using standard datatype declarations.

In another aspect, the invention provides a development environment for use with a compiler for a standard datatype notation comprising a table generator for processing a set of labeled standard datatype definitions and a set of corresponding substructure definitions, or compiler output generated therefrom, to generate a table linking the standard datatype definitions to position data for positioning the substructures with respect to the data structures and logic for generating access functions for the substructure by combining access functions generated by the ASN.1 compiler with accesses to retrieved data items using the position information from the generated table.

Such a development environment can advantageously provide a facility for integrating standard message sets into a network element.

A further aspect of the invention provides a datastructure definition for use with a compiler for a standard datatype notation comprising a set of labeled standard datatype definitions and a set of corresponding substructure definitions that can be used to generate a table linking the standard datatype definitions to position data for positioning the substructures with respect to the data structures.

### Brief Description of the Drawings

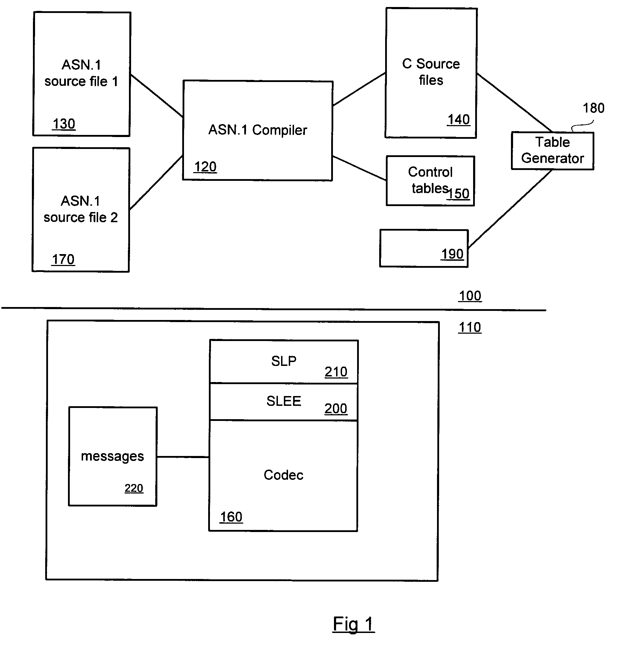

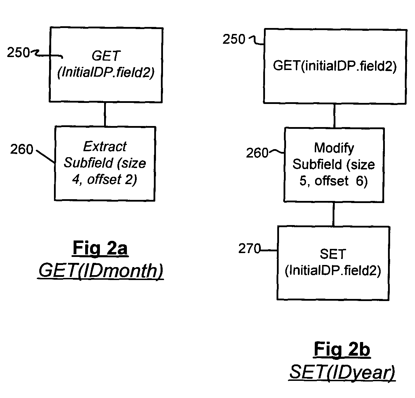

An embodiment of the invention within a service control platform for a Telecommunications system will now be described, by way of non-limiting example only, with reference to the accompanying diagrammatic drawings, in which:
. Figure 1 shows a service control platform having a service development part and a runtime part;
. Figures 2a and 2b are flow diagrams showing GET and SET access operations.

### Detailed Description of an Embodiment of the Invention

In the following, application of the invention to the implementation of protocol standards expressed in ASN.1 language within digital signaling networks based on the SS7 set of standards, although it will be understood that the techniques to be described may be applied in any other similar or comparable context where ASN.1 or similar languages are employed.

Figure 1 is a schematic diagram showing the relevant parts of a service control platform for use in a controlling services present within telecommunications network and having a service development part 100 and a runtime part 110. In this embodiment, runtime part 110 would normally form part of a Service Execution Point (SEP) within an SS7 signaling network. Other aspects of the SEP are conventional and will not be described.

Development part 100 includes a standard ASN.1 compiler 120 of which there are a number of commercially available versions. ASN.1 compiler 120 takes as input a first source file 120 which contains ASN.1 code which is equivalent to a standard set of message definitions as described below. ASN.1 compiler 120 operates in its normal way and generates as output a set of C language files 140 and control tables 150 for controlling a runtime coder/decoder component 160.

A second source file 170 is also provided that contains supplementary ASN.1 code that corresponds to OCTET STRING subfields and takes the form that will described below.

A table generator component 180 is provided for generating a table linking field short names to their ASN.1 long names by generating a table 190.

The runtime part of the system 110 includes runtime coder/decoder component 160. A service logic execution environment SLEE layer 200 and an Service Logic Program application layer 210. The codec 160 and SLEE layer 200 allow an SLP 210 to access and modify, via GET and SET commands respectively, fields in messages 220 that are being processed in the system. GET and SET command functions for standard ASN.1 OCTET STRING fields are generated by compiler 120. GET and SET command functions for subfields of the OCTET STRING fields are included in the service control platform and operate in a manner to be described below.

The general operation of the system described in Fig 1 is as follows. Source code files 130 and 170 are compiled by ASN.1 compiler 120 to generate output C code files 140. The table generator 180 processes the output C files 140 170 to generate table 190. This table and the generated C code files are included with other source code in the compilation, by a conventional C compiler, of service controller platform layer 200.

The details of the structure of the ASN.1 code will now be described with reference to a very simple example. This simple example is used for the purposes of illustration only. It will be appreciated that specifications of the kind of data used in modem telecommunications systems are much more complex than the above-mentioned simple example and may contain very many fields arranged in complex hierarchies and very lengthy OCTET STRINGS. However, it will be understood that the techniques to be described are of equal applicability whatever the complexity of the structures.

A simple ASN.1 description is shown in table 1.

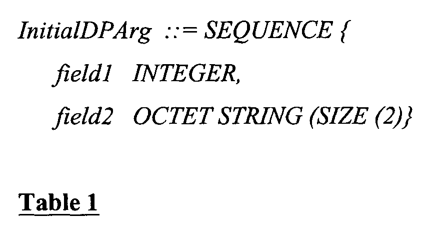

This describes a very simple data structure made up of an integer and an octet string of length 2 octets. If this ASN.1 description is compiled using an ASN.1 compiler such as compiler 120, SET and GET operations are generated that allow field and field2 to be accessed using their long names: *InitialDPArg.field1* and *InitialDPArg.field2.*

It is desirable in a system of this type to also enable SET and GET operations to be performed on the fields using short names. The mapping between the short names and the long names is contained in table 190 that associates short names and long names and which is generated automatically as will be described below from the output of the compiler 120 which is determined by the ASN.1 source code files 130 and 170.

For instance, it will be supposed, for the sake of example only, that the OCTET STRING is a date having the following substructure:
Bits 0 to 1 are the year (00 = last, 01 = current, 10 = next);
Bits 2 to 5 are the month (0001 = January, 0010 = February...);
Bits 6 to 10 are the day (00001 = 1, 00010 = 2...); and
Bits 11 to 15 are reserved for future use.

It is assumed that, as is normally the case, the content of the OCTET STRING is not described in the standard being implemented using the ASN.1 language, rather a textual description is usually associated with the OCTET STRING and describes the signification of the different bits of the OCTET STRING. So if only the standard ASN.1 descriptions are compiled, no SET and GET functions would be provided for the Year, the Month and the Day in the example given above.

The system described here allows application layer 210 access the subfields of the OCTET STRING in the same way as any other ASN.1 field can be accessed, using short names. For instance, the short names could be *IDYear, IDMonth* and *IDDay.* As will be described in more detail below, SET and GET functions for the subfields are provided by supplementary and non-standard ASN. declarations, that is ASN.1 declarations that do not form part of the standard protocol being implemented, included in source file 170.

Firstly, however, the ASN.1 descriptions in source file 130 are modified to include a label for the OCTET STRING description *InitialDPArg.field2:*

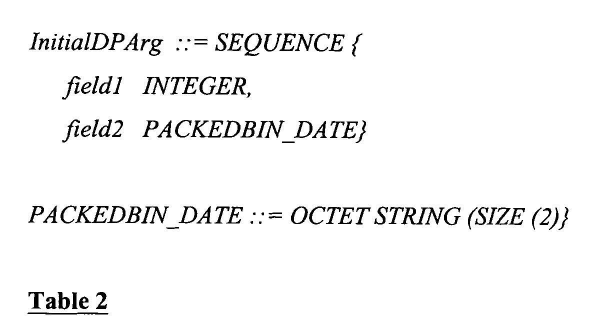

It will be appreciated that the above ASN.1 code is equivalent to the code shown in Table 1 and thus if the definition shown in Table 1 was one that was included in a protocol standard then this modified version of Table 2 would still fully comply with the standard.

Secondly, a corresponding supplementary declaration is included in file 170 as shown in Table 3.

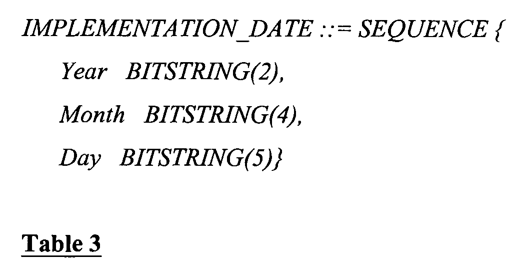

In this way, the substructure of the OCTET STRING is described in file 170 also with standard ASN.1 language. A naming convention is established that enables the table generator to identify the label PACKEDBIN_DATE with the sequence IMPLEMENTATION_DATE.

The supplementary description of Table 3 is used together with the ASN.1 code of Table 2 to automatically generate the short name to long name mapping table 190. Table generator 180 takes as input the C source files 140 and identifies corresponding declarations within each file on the basis of the naming convention and generates a mapping table including the size of each subfield and its offset from the beginning of the OCTET STRING. A set of short names is generated based on abbreviated versions of the ASN.1 long names from Table 2 to which the qualifiers *year, month, day* from Table 3 are appended. Again, any suitable convention may be established for generating the set of unique short names.

The file could have the format shown in Table 4, for instance:

**Table 4**

| Short Name | Long Name | Size (in bits) | Offset |
|---|---|---|---|
| IDField1 | InitialDP.field1 | | |
| IDField2 | InitialDP.field2 | | |
| IDYear | InitialDP.field2 | 2 | 0 |
| IDMonth | InitialDP.field2 | 4 | 2 |
| IDDay | InitialDP.field2 | 5 | 6 |

The SLEE layer then uses this table to provide SET and GET functions for the subfields of the OCTET STRING, in addition to the SET and GET functions provided by the ASN.1 compiler. These processes are illustrated in Figs 2a and 2b.

Fig 2a illustrates a GET operation in which a GET for the whole OCTET STRING *InitialDP.field2* is performed in step 250 using the GET function for the string which is provided by compiler 120. The subfield is then extracted using the length and offset information from table 190 and passed to SLP 210 in step 260. In fig 2a, the example of an access to the subfield having shortname *IDMonth* is illustrated.

Fig 2b illustrates the case of a SET function for subfield having shortname *IDYear.* A GET for the whole OCTET STRING is performed in step 250 using the GET function for the string which is provided by compiler 120. The selected subfield is then modified in step 270 and finally the whole OCTET STRING is replaced by using a SET function provided by compiler 120 in step 280.

Each time the application sets a packed bin subfield of the type described above, the adaptation layer performs a GET on the corresponding OCTET STRING (field2 in our case), adds the new bits at the correct offset, and then performs a SET for the modified OCTET STRING. So that the whole OCTET STRING is replaced each time the application modifies a part of it. In this way, the application is provided with GET and SET functions for setting the Day, the Month and the Year of the date.

It will be appreciated that such functions for each defined shortname may be readily generated automatically for inclusion in or use by SLEE 200 from the information contained in table 190 as exemplified by Table 4.

Thus to implement the above techniques for more complex protocol definitions the standard ASN.1 descriptions are modified to take the form illustrated in Table 2 to include labels for each field which has a substructure that is not described by the standard ASN. descriptions. Then the corresponding supplementary descriptions of the form illustrated in Table 3 are defined to describe the logical substructures and are named in accordance with the naming conventions so that they can be identified with the labels included in the standard ASN.1 code.

In the example illustrated in Fig 1, these supplementary structures are shown for clarity as being included in a separate file, but of course they could equally be included in the same file as the standard ASN.1 descriptions or may be stored or arranged in any other suitable way. The table generator 180 processes the output C files 140, which it will be appreciated include substantially the same definitions in another form, to generate table 190. However, table generator 180 could equally be arranged to process the ASN.1 descriptions 130 and 170 directly or, alternatively, the supplementary structures 170 could be expressed in another language such as C, rather than in ASN.1 in order to be processed directly by table generator 180.

From these source files the table 190, including the set of shortnames for the substructures, and the GET and SET functions allowing application 210 to access the substructures can be automatically generated.

It will be appreciated that the present embodiments take the form of a set of computer programs intended for use with general purpose computing and signaling platforms and which may be marketed in the form of suitable computer program products including the functionality described. It will be appreciated that the invention may equally be implemented as special purpose hardware or any combination of software and hardware.

Although a specific embodiment of the invention has been described, the invention is not to be limited to the specific arrangement so described. The invention is limited only by the claims. The claims themselves are intended to indicate the periphery of the claimed invention and are intended to be interpreted as broadly as the language itself allows, rather than being interpreted as claiming only the exemplary embodiment disclosed by the specification.

## Claims

1. A method for providing access functions to substructure fields within a data structure defined using a standard datatype definition, comprising:
labeling the data structure within the standard definition;
providing a corresponding definition of the substructure;
generating from the labeled standard datatype definition and the corresponding substructure definition, a table that links the data structure with position data positioning the substructure with respect to the data structure;
compiling the standard datatype definition to generate access functions for the data structure; and
generating access functions for the substructure fields by combining the access functions for the data structure and using the position information from the generated table to access to data items therein.

2. A method as claimed in claim 1 comprising defining shortnames for the substructure fields, linking the shortnames to the standard datatype definition in the generated table, generating the access functions so that they may be used to access the substructure fields using the shortnames.

3. A method as claimed in claim 1 or claim 2 wherein the standard datatype definition is an ASN.1 declaration.

4. A method as claimed in any preceding claim where in the data structure is an octet string.

5. A method as claimed in any preceding claim wherein the substructure definitions are expressed using standard datatype definitions.

6. A method for integrating a message set into a network element comprising carrying out a method as claimed in any preceding claims for a plurality of substructures in the message set.

7. A development environment for use with a compiler for a standard datatype notation comprising a table generator for processing a set of labeled standard datatype definitions and a set of corresponding substructure definitions, or compiler output generated therefrom, to generate a table linking the standard datatype definitions to position data for positioning the substructures with respect to the data structures and an access function generator for generating access functions for the substructure by combining access functions generated by the ASN. compiler with accesses to retrieved data items using the position information from the generated table.

8. A development environment as claimed in claim 7 wherein the table generator links shortnames to the standard datatype definitions in the generated table and the access table generator generates the access functions so that they may be used to access the substructures using the shortnames.

9. A facility for integrating standard message sets into a network element comprising a development environment as claimed in claim 6 or claim 7.

10. A datastructure definition for use with a compiler for a standard datatype notation a set of labeled standard datatype definitions comprising a set of corresponding substructure definitions that can be used to generate a table linking the standard datatype definitions to position data for positioning the substructures with respect to the data structures.
